# EUROPEAN PATENT APPLICATION

(11) **EP 2 026 076 A1**
(43) Date of publication of application: **18.02.2009**
(21) Application number: 07744605.2
(22) Date of filing: 01.06.2007
(51) Int. Cl.: G01N 35/10, G01N 35/00

(54) **SAMPLE DISPENSING DEVICE**

(30) Priority: 02.06.2006 JP 2006154636
(71) Applicant: Olympus Corporation, Tokyo 151-0072 (JP)
(72) Inventor: SAEGUSA, Isao, Shibuya-ku, Tokyo 151-0072 (JP)
(74) Representative: von Hellfeld, Axel
(86) International application number: PCT/JP2007/061218
(87) International publication number: WO 2007/142155

(57) **Abstract**

Clogging of a sample probe is reliably detected even when the suction level of a sample varies. Provided are a sample dispenser (1) including a sample probe (3) inserted into a sample vessel (2), a dispensing pump (8) for suctioning a sample (S) contained in the sample vessel (2) into a sample probe (3) or discharging the sample (S) in the sample probe (3) by changing a pressure in a tube (4) that is connected to the sample probe (3), a pressure sensor (9) for detecting the pressure in the tube (4) containing the sample probe (3), and a determining unit (10) for determining clogging of the sample probe (3) on the basis of a pressure value (P) detected by the pressure sensor (9) and a suction velocity of the sample (S) due to the dispensing pump (8).

## Description

### Technical Field

The present invention relates to sample dispensers used in, for example, devices for analyzing samples, such as blood or urine.

### Background Art

A conventional sample dispenser of this type is disclosed in Patent Document 1.
With this sample dispenser, for preventing the problem of a solid substance, such as blood serum or fibrin contained in blood plasma, which is a sample, becoming clogged in a sample probe, causing analysis to be carried out without dispensing a predetermined amount of sample into a reaction vessel, the pressure in a tube containing the sample probe is detected by a pressure sensor at a predetermined timing before starting a sample discharge operation after completion of a sample suction operation, and the sample probe is determined to be clogged when the pressure is lower than a predetermined pressure value.
Patent Document 1: Japanese Unexamined Patent
Application, Publication No. HEI-11-83868

### Disclosure of Invention

However, with the sample dispenser disclosed in Patent Document 1, clogging of the tube containing the sample probe can be detected based on whether or not a pressure value after a suction operation of the sample returns to its normal value, but there is a problem in that a change in the suction level of the sample lowers the reliability of the clogging determination.

The present invention has been conceived in light of the circumstances described above, and an object thereof is to provide a sample dispenser capable of more reliably detecting clogging of a sample probe even when the suction level of the sample varies.

To realize the objects described above, the present invention provides the following solutions.
The present invention provides a sample dispenser comprising a sample probe that is inserted into a sample vessel; a dispensing pump for suctioning a sample contained in the sample vessel into a sample probe or discharging the sample in the sample probe by changing a pressure in a tube that is connected to the sample probe; a pressure sensor for detecting the pressure in the tube containing the sample probe; and a determining unit for determining clogging of the sample probe on the basis of a pressure value detected by the pressure sensor and a suction velocity of the sample due to the dispensing pump.

According to the present invention, the sample in the sample vessel can be sucked into the sample probe by inserting the sample probe into the sample vessel and by operating the dispensing pump to increase a negative pressure in the tube connected to the sample probe, and the sample can be discharged by increasing a positive pressure. In this case, because clogging of the sample probe is determined on the basis of a pressure in the tube detected by the pressure sensor and the suction velocity of the sample due to the dispensing pump, clogging can be more reliably determined even when the suction level of the sample varies. In addition, even when the suction level increases, the pressure detected by the pressure sensor does not change if the suction time becomes large; therefore, clogging of the sample probe can be more reliably determined by using a suction velocity obtained by dividing the suction level by the suction time, instead of using the suction level itself.

In the invention described above, the determining unit may have a plurality of threshold values according to suction velocities and may determine clogging of the sample probe when a detected pressure of the pressure sensor during the suction operation of the sample by the dispensing pump is lower than a threshold value corresponding to a suction velocity.
By doing so, when the pressure detected by the pressure sensor during suctioning of the sample is lower than the threshold value, the sample probe is determined to be clogged. Because a plurality of threshold values are provided according to the suction velocities, clogging of the sample probe is determined if a low pressure value is detected when increasing the suction velocity and if a high pressure value is detected when decreasing the suction velocity. Accordingly, clogging of the sample probe can be more easily determined.

In addition, in the invention described above, the determining unit may have a plurality of threshold values according to suction velocities and may determine clogging of the sample probe when a pressure of the pressure sensor detected at the end of the suction operation of the sample by the dispensing pump is lower than a threshold value corresponding to a suction velocity.
By doing so, clogging of the sample probe can also be more reliably detected, thus dispensing accurately.

According to the present invention, an advantage is afforded in that clogging of a sample probe can be more reliably detected even when the suction level of a sample varies.

### Brief Description of Drawings

[FIG. 1] Fig. 1 is a diagram showing the overall configuration of a sample dispenser according to an embodiment of the present invention.
[FIG. 2A] Fig. 2A is a diagram showing changes in pressure in a tube during a suction operation of a sample with the sample dispenser shown in Fig. 1, with suction velocity as a parameter.
[FIG. 2B] Fig. 2B is a diagram showing the suction operation of a sample when suction command signals is output.

### Explanation of Reference Signs:

- A:: threshold value
- P:: pressure value
- S:: sample
- 1:: sample dispenser
- 2:: sample vessel
- 3:: sample probe
- 4:: tube
- 8:: dispensing pump
- 9:: pressure sensor
- 10:: determining unit
- 17:: comparison unit

### Best Mode for Carrying Out the Invention

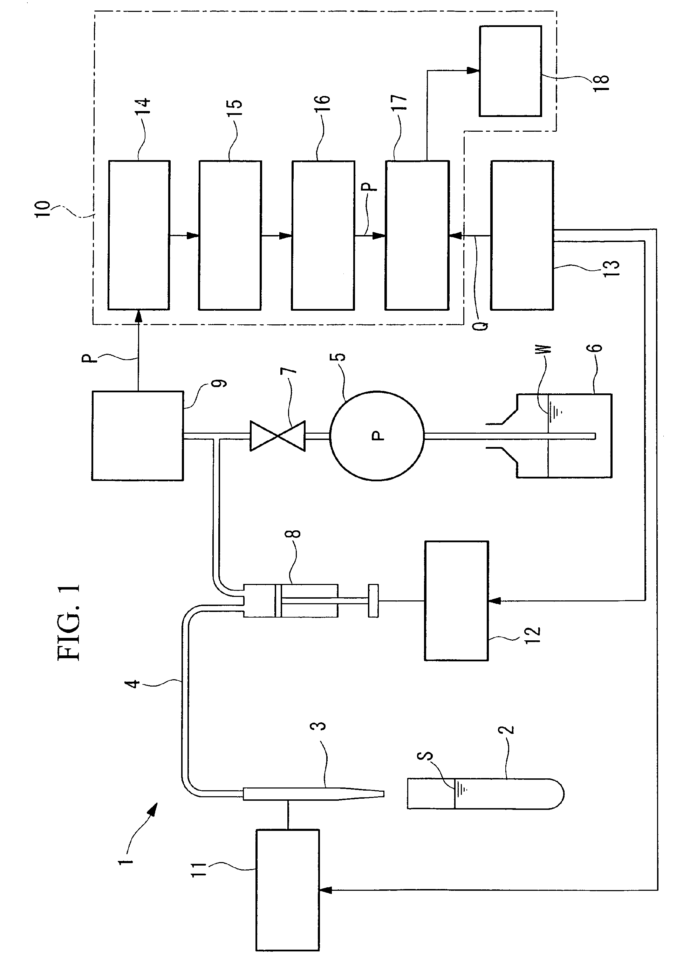

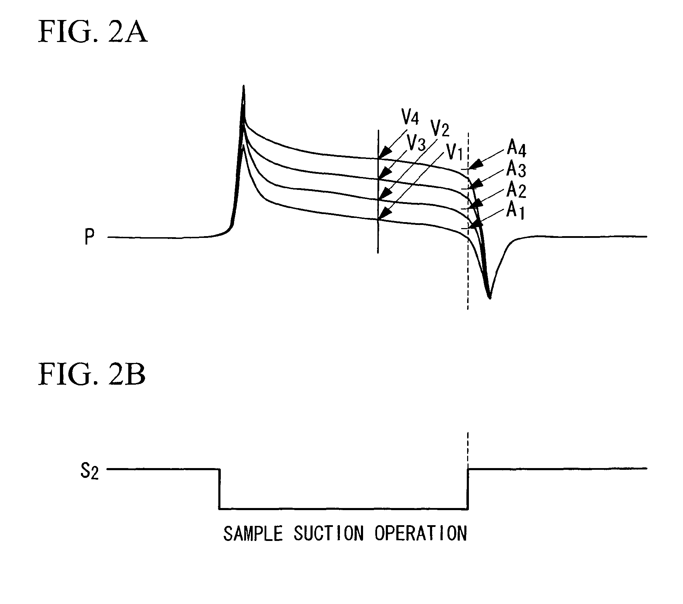

A sample dispenser 1 according to an embodiment of the present invention will be described below with reference to Figs. 1, 2A and 2B.
As shown in Fig. 1, the sample dispenser 1 according to this embodiment includes a sample probe 3 that is inserted in and removed from a sample vessel 2 containing a sample S, a clean water pump 5 that is connected to the sample probe 3 via a tube 4, a clean water tank 6 that stores clean water W to be sucked into the tube 4 by the clean water pump 5, a solenoid valve 7 that opens and closes the tube 4 between the clean water pump 5 and the sample probe 3, a dispensing pump 8 that is formed of, for example, a syringe disposed at the tube 4 between the solenoid valve 7 and the sample probe 3, a pressure sensor 9 that is disposed at the tube 4 between the dispensing pump 8 and the solenoid valve 7, and a determining unit 10 that determines clogging of the sample probe 3 based on a pressure signal from the pressure sensor 9. The sample probe 3 and the dispensing pump 8 are connected to a probe driving device 11 and a pump driving device 12, respectively, which are driven and controlled by a control device 13.

The determining unit 10 includes an amplifying circuit 14 that amplifies the pressure signal detected by the pressure sensor 9; an A/D converter 15 that converts the pressure signal amplified by the amplifying circuit 14 to a digital signal; a sampling unit 16 that samples, at a predetermined timing, the pressure signal converted to the digital signal by the A/D converter 15; a comparison unit 17 that compares a pressure value P sampled at the sampling unit 16 with a threshold value A stored in advance; and a notification unit 18 that notifies clogging of the sample probe 3 when the pressure value P is lower than the predetermined threshold value A as a result of the comparison.

As shown in Table 1, multiple threshold values A₁ to A₄ for determining the occurrence of clogging of the sample probe 3 and multiple suction velocities V₁ to V₄ of a sample S sucked by the sample probe 3 are stored in the comparison unit 17 in association with each other. The comparison unit 17 receives a suction-level signal Q from the control device 13, calculates a suction velocity V by dividing it by the suction time, and selects the associated threshold values A₁ to A₄.

**[Table 1]**

| SUCTION VELOCITY V OF SAMPLE | THRESHOLD VALUE A |
|---|---|
| V ≤ V₁ | A₁ |
| V₁ < V ≤ V₂ | A₂ |
| V₂ < V < V₃ | A₃ |
| V₃ < V ≤ V₄ | A₄ |

For example, it is arranged that, when the suction velocity is V ≤ V₁, the threshold value A₁ is selected, when the suction velocity is V₁ < V ≤ V₂, the threshold value A₂ is selected, when the suction velocity is V₂ < V ≤ V₃, the threshold value A₃ is selected, and when the suction velocity is V₃ < V ≤ V₄, the threshold value A₄ is selected.

The operation of the sample dispenser 1 according to this embodiment, having such a configuration, will be described below.
In order to suck the sample S in the sample vessel 2 using the sample dispenser 1 according to this embodiment, first, the clean water pump 5 is operated with the solenoid valve 7 opened. By doing so, the clean water W in the clean water tank 6 is pumped up into the tube 4 to fill substantially the entirety of the tube 4 with the clean water W until it reaches substantially the tip of the sample probe 3. At this time, the liquid surface of the clean water W in the sample probe 3 is set to be slightly higher than the tip of the sample probe 3.

In this state, the solenoid valve 7 is closed and the probe driving device 11 is operated in response to a command signal S₁ from the control device 13. Specifically, by operating the probe driving device 11, the sample probe 3 is positioned where the sample is sucked, and is then lowered until a tip portion 3a thereof is dipped into in the sample S in the sample vessel 2 to a predetermined depth. Because the liquid surface of the clean water W is located at a position slightly higher than the tip of the sample probe 3, a slight air layer is formed between the liquid surface of the clean water W and the liquid surface of the sample S in this state.

Subsequently, the dispensing pump 8 formed of a syringe is operated in response to a suction command signal S₂ sent from the control device 13. Specifically, by moving a piston of the dispensing pump 8 in the direction in which it is retracted from a cylinder, the pressure in the tube 4 is made a negative pressure, thus raising the liquid surface of the clean water W in the sample probe 2. By doing so, the liquid surface of the sample S in close contact therewith via the slight air layer is also raised in the sample probe 2, and a predetermined amount of the sample S is sucked into the sample probe 2.

Fig. 2A and 2B shows the relationship between the suction command signal S₂ in the suction operation from the control device 13 and the pressure value P in the tube 4 detected by the pressure sensor 9, with the suction velocity V as a parameter. In Fig. 2A, the direction in which the negative pressure becomes large is shown as the upward direction.

As shown in Fig. 2B, when the suction command signal S₂ with a rectangular waveform is output from the control device 13 to drive the dispensing pump 8, the pressure value P in the tube 4 is changed slightly after the suction command signal S₂, as shown in Fig. 2A. In this embodiment, a sampling unit 16 in the determining unit 10 samples the pressure value P of the pressure sensor 9 as a trigger, for example, the trailing edge of the suction command signal S₂.

Thereafter, by operating the probe driving device 11, the sample probe 3 is raised and extracted from the sample vessel 2, delivered to a reaction vessel (not shown) or the like that is placed at a place other than the sample vessel 2, and then, by operating the dispensing pump 8, the sample S in the sample probe 3 is discharged. Specifically, by moving the piston of the dispensing pump 8 in the direction pushing it into the cylinder, the pressure value P in the tube 4 containing the sample probe 3 is raised to discharge the sample S in the sample probe 3.

Then, the sample probe 3 is moved to a cleaning position other than the discharging position. In this state, by driving the clean water pump 5 while opening the solenoid valve 7, the clean water W in the clean water tank 6 is discharged from the tip portion 3a of the sample probe 3, allowing the inside of the sample probe 3 to be cleaned.
By repeating the above-described operation, the sample S in the sample vessel 2 can be sequentially dispensed into reaction vessels or the like.

In this case, when the operation of dispensing the sample S using the sample probe 3 is repeated, the sample S adheres to the internal surface of the sample probe 3 over time. If the sample S starts adhering to the internal surface of the sample probe 3 in this way, the pressure value P in the tube 4 detected during suction of the sample S by the pressure sensor 9 decreases.

In this embodiment, the pressure value P of the pressure sensor 9 is sampled by using the trailing edge of the suction command signal S₂ as a trigger, because the actual pressure value P in the tube 4 is changed after the suction command signal S₂, the pressure value P of the pressure sensor 9 during sampling becomes the pressure value P during the suction operation, decreasing that pressure value P in a similar way.

As shown in Fig. 2A, it is found that the larger the suction velocity V (V₁ < V₂ < V₃ < V₄), the greater the negative pressure of the pressure value P. In this embodiment, because a plurality of threshold values A that determine clogging of the sample probe 3 are set according to the suction velocity V, it is possible to easily and reliably identify whether the negative pressure increases due to clogging of the sample probe 3 or due to an increase in the suction velocity V.

As a result of the comparison at the comparison unit 17, when the pressure value P in the sample probe 3 is larger than a predetermined threshold value A selected according to the suction velocity V, the occurrence of clogging in the sample probe 3 is externally notified by operating a notification unit 18. Accordingly, because the sample probe 3 is replaced by an operator in accordance with the notification, it is possible to prevent an inaccurate dispensing operation caused by using the clogged sample probe 3 for dispensing.

In this embodiment, the pressure value P of the pressure sensor 9 is sampled by using the trailing edge of the suction command signal S₂ as the trigger. However, it is not limited thereto; a pressure value P may be sampled at any time during the suction operation.
In addition, the threshold value A that determines clogging of the sample probe 3 may be appropriately set according to the sample S to be sucked.

In this embodiment, a plurality of threshold values A₁ to A₄ are prepared and selected according to the suction velocity V. Instead of this, however, a relational expression of the suction velocities V and the threshold values A may be stored in advance, and an appropriate threshold value A may be set by calculating each time on the basis of the suction-level signal Q or a suction velocity signal sent from the control device 13.

## Claims

1. A sample dispenser comprising:
a sample probe that is inserted into a sample vessel;
a dispensing pump for sucking a sample in the sample vessel into a sample probe or discharging the sample in the sample probe by changing a pressure in a tube that is connected to the sample probe;
a pressure sensor for detecting the pressure in the tube containing the sample probe; and
a determining unit for determining clogging of the sample probe on the basis of a pressure value detected by the pressure sensor and a suction velocity of the sample due to the dispensing pump.

2. A sample dispenser according to Claim 1, wherein the determining unit has a plurality of threshold values according to suction velocities and determines clogging of the sample probe when a detected pressure of the pressure sensor during the suction operation of the sample by the dispensing pump is lower than a threshold value corresponding to a suction velocity.

3. A sample dispenser according to Claim 1, wherein the determining unit has a plurality of threshold values according to suction velocities and determines clogging of the sample probe when a pressure of the pressure sensor detected at the end of the suction operation of the sample by the dispensing pump is lower than a threshold value corresponding to a suction velocity.
